# EUROPÄISCHE PATENTSCHRIFT

(11) **EP 0 745 029 B1**
(45) Veröffentlichungstag und Bekanntmachung des Hinweises auf die Patenterteilung: **12.05.1999**
(21) Anmeldenummer: 95942682.6
(22) Anmeldetag: 16.12.1995
(51) Int. Cl.: B29C 45/17, B29C 49/56

(54) **FORMSCHLIESSVORRICHTUNG FÜR EINE KUNSTSTOFFORMMASCHINE, INSBESONDERE EINE SPRITZGIESSMASCHINE**
DIE CLAMP FOR PLASTIC MOULDING MACHINES, IN PARTICULAR INJECTION MOULDING MACHINES
MECANISME DE SERRAGE DE MOULE POUR MACHINES DE MOULAGE DE MATIERES PLASTIQUES, NOTAMMENT DES MACHINES DE MOULAGE PAR INJECTION

(30) Priorität: 20.12.1994 DE 4445448; 20.12.1994 DE 4445450; 04.10.1995 DE 29515748 U
(43) Veröffentlichungstag der Anmeldung: 04.12.1996
(73) Patentinhaber: Krauss-Maffei Aktiengesellschaft, 80997 München (DE)
(72) Erfinder: PICKEL, Herbert, D-82152 Planegg (DE); WOHLRAB, Walter, D-91781 Weissenburg (DE)
(74) Vertreter: Rucker, Bernd, Dipl.-Ing.
(86) Internationale Anmeldenummer: EP9504989
(87) Internationale Veröffentlichungsnummer: WO9619331

(56) Entgegenhaltungen:
- EP-A- 0 554 068
- EP-A- 0 620 095
- DE-A- 2 162 630
- DE-U- 9 212 480

## Beschreibung

Die Erfindung betrifft eine Formschließvorrichtung für eine Kunststofformmaschine von der im Oberbegriff des Anspruchs 1 angegebenen Art. Die Erfindung ist vorzugsweise bei einer Spritzgießmaschine anwendbar, wobei in diesem Fall nur eine bewegliche Formaufspannplatte vorgesehen ist und eine der beiden Festplatten als feststehende Formaufspannplatte ausgebildet ist. Die andere Festplatte ist die Abstützplatte des Schließantriebs. Die Erfindung ist aber auch anwendbar bei Formschließvorrichtungen, die zwei bewegbare Formaufspannplatten aufweisen, die von zwei Antriebseinheiten gegeneinander bewegbar sind. Beide Festplatten sind dann Abstützplatten für die beiden Schließantriebe. Diese Bauart ist insbesondere bei Blasformmaschinen anzutreffen.

Die von dem Schließantrieb für das Schließen der Form ausgeübte Kraft wirkt auf die beiden Festplatten als eine sie auseinanderdrückende Reaktionskraft. Zusätzlich übt der in die geschlossene Form injizierte Kunststoff eine die Formhälften auseinanderdrückende Auftreibkraft aus, die ebenfalls von den Festplatten aufgenommen werden muß. Die beiden Festplatten müssen deshalb durch ausreichend dimensionierte Zugglieder verbunden sein, die eine Auseinanderbewegung der Festplatten und damit insbesondere ein Öffnen der Form unter dem Einspritzdruck verhindern.

Bei Spritzgießmaschinen tradioneller Bauart bestehen die Zugglieder aus vier geradlinigen Holmen oder Säulen, die die beiden Festplatten, d.h. in der Regel die feststehende Formaufspannplatte und die den Schließzylinder tragende Abstützplatte, miteinander verbinden und in den Eckbereichen dieser Platten befestigt sind. Damit wird eine zuverlässige gegenseitige Abstützung der Festplatten mit gleichmäßiger Kräfteverteilung über die Fläche dieser Platten erzielt, die ein Öffnen der Form unter dem Einspritzdruck zuverlässig verhindern kann, und zwar auch dann, wenn aufgrund der Gestaltung der Spritzform der Einspritzdruck unsymmetrisch zur Mittelachse der Form wirkt. Die Verwendung von geraden Holmen oder Säulen als Zugglieder hat aber den Nachteil, daß insbesondere die beiden vom Rahmen entfernten Holme den freien Zugang zum Raum zwischen den Festplatten behindern. Damit wird insbesondere die Verwendung eines Handlinggerätes erschwert, das zwischen die geöffneten Formen eingefahren werden soll, um die fertig geformten Artikel zu entnehmen.

Die vorliegend verwendete Bezeichnung "Festplatten" bedeutet, daß die Platten in Betrieb im wesentlichen stationär sind und bei der Öffnungs- und Schließbewegung der Formwerkzeuge nicht mitbewegt werden. In der Regel ist aber mindestens eine dieser Festplatten, evtl. auch beide, am Maschinenrahmen derart begrenzt verschiebbar gelagert, daß sie unter dem Einfluß der Schließkraft kleine Verschiebungsbewegungen in Längsrichtung der Maschine zum Ausgleich der Längenänderungen der Zugglieder ausführen kann.

Um eine Behinderung des Zugangs zu dem Raum zwischen den Formen zu vermeiden, sind sogenannte holmlose Spritzgießmaschinen vorgeschlagen worden. Diese haben anstelle der geradlinigen Holme oder Säulen auf jeder Seite der Maschine ein C-förmiges Zugglied, welches die beiden Festplatten miteinander verbindet und im Bereich zwischen den Festplatten im wesentlichen unterhalb der Oberkante des Maschinenrahmens verläuft und dadurch den Raum zwischen den Festplatten zugänglich läßt. Eine derartige holmlose Spritzgießmaschine ist z.B. aus EP 0 554 068 bekannt. Die Anwendung des gleichen Prinzips mit C-förmigen Zuggliedern bei einer Kunststofformmaschine mit zwei gegeneinander beweglichen Formaufspannplatten, insbesondere einer Blasformmaschine ist aus US-A-3 787 165 bekannt. Es ist ferner aus DE 44 11 649 A1 bekannt, derartige C-förmige Zugglieder aus mehreren Teilen, z. B. aus zwei miteinander verbundenen L-förmigen Teilen zusammenzusetzen. Das ändert aber nichts daran, daß die L-förmigen Teile zusammen ein C-förmiges Glied bilden, das nur an zwei Punkten mit den Festplatten verbunden ist.

Es ist ferner bekannt, auf die Verwendung von gesonderten Zuggliedern ganz zu verzichten und die beiden Festplatten unmittelbar an dem entsprechend C-förmig ausgebildeten Maschinenrahmen abzustützen, wie z.B. in DE-U-92 12 480.1.

Die Einleitung der Schließ-Reaktionskräfte in ein C-förmiges Zugglied oder einen C-förmigen Maschinenrahmen hat aber zur Folge, daß die unvermeidliche Verformung des C-Gliedes mit einem Aufspreizen der C-Schenkel, d.h. mit einer Winkeländerung der C-Schenkel verbunden ist. Damit dies nicht zu einer entsprechenden Winkeländerung zwischen den Festplatten, d.h. zu einem Verlust der Parallelität der Festplatten führt, ist bei sämtlichen vorbekannten Konstruktionen vorgesehen, daß die beiden Festplatten in ihrer Mitte um eine horizontale Achse kippbar mit den C-förmigen Zuggliedern bzw. mit dem Maschinenrahmen verbunden sind. Damit haben die beiden Festplatten zwar die Freiheit, unabhängig von Verformungen der C-förmigen Zugglieder oder des Maschinenrahmens ihre Parallelstellung zueinander beizubehalten. Aufgrund ihrer freien Kippbarkeit um die horizontale Achse können die beiden Festplatten, und damit die mit ihnen verbundenen Formwerkzeuge, durch Auftreibkräfte, die exzentrisch zur Mittelachse des Formwerkzeuges wirken, um diese horizontale Achse derart verkippt werden, daß sich der Spalt zwischen den Formwerkzeugen einseitig öffnet, was zu einem Austritt der Kunststoffschmelze in den Spalt und zu Gratbildung am gespritzten Formstück führen kann. Bei den bekannten Konstruktionen wird daher der Vorteil des unbehinderten Zugangs zu dem Raum zwischen den Festplatten erkauft durch den Nachteil, daß die Vorrichtung gegen einseitiges Aufdrücken der Formwerkzeuge anfällig ist.

Der Erfindung liegt die Aufgabe zugrunde, eine Vorrichtung der genannten Art so auszubilden, daß der Raum zwischen den Festplatten unbehindert von geradlinigen Führungssäulen frei zugänglich ist, die Festplatten aber durch die Zugglieder zuverlässig in ihrer parallelen Ausrichtung zueinander gehalten werden.

Eine erste erfindungsgemäße Lösung der Aufgabe ist im Anspruch 1 angegeben. Bei dieser Lösung wird durch geeignete Formgebung und Dimensionierung der unteren Zugglieder dafür gesorgt, daß diese unter dem Einfluß der Schließkraft die gleiche Elongation haben wie die oberen Zugglieder, so daß für exakte Parallelität der Festplatten gesorgt ist. Am einfachsten läßt sich dies gemäß Anspruch 2 dadurch erreichen, daß alle Zugglieder gleiche Form und gleiche Abmessungen haben.

Eine zweite erfindungsgemäße Lösung der Aufgabe ist im Anspruch 7 angegeben. Bei dieser Lösung werden untere und obere Zugglieder verwendet, die aufgrund unterschiedlicher Formgebung auch einen unterschiedlichen Verformungswiderstand gegenüber der Schließkraft haben. Durch Zwischenschaltung von nachgiebigen Kraftübertragungselementen zwischen den Zuggliedern und mindestens einer der Festplatten kann jedoch die unterschiedliche Verformungssteifigkeit der Zugglieder ausgeglichen und eine exakte Parallelität der Festplatten gewährleistet werden.

Beide erfindungsgemäße Lösungen haben gegenüber konventionellen Vorrichtungen, bei denen die Festplatten durch vier geradlinige Zugholme verbunden sind, den Vorteil, daß die oberen Zugglieder aufgrund C-Form so gestaltet sind, daß sie den Zugang zu dem Raum zwischen den Festplatten, und insbesondere den Zugang zu dem Raum zwischen den geöffneten Spritzgießformwerkzeugen, nicht behindern. Gegenüber den eingangs genannten holmlosen Maschinen, die auf beiden Seiten der Maschine nur je ein Zugglied von C-förmiger Ausbildung aufweisen, haben beide erfindungsgemäßen Lösungen den Vorteil, daß die Festplatten oberhalb und unterhalb der Schließkraftachse durch Zugglieder verbunden sind und deshalb durch die Zugglieder in ihrer Parallelstellung gehalten werden.

Ausführungeformen der Erfindung werden anhand der Zeichnungen näher erläutert. Es zeigt:
- Fig. 1: eine schematische perspektivische Ansicht einer Formschließvorrichtung für eine Spritzgießmaschine gemäß einer ersten Ausführungsform der ersten Lösung gemäß der Erfindung;
- Fig. 2: in schematischer Seitenansicht eine zweite Ausführungsform der Erfindung;
- Fig. 3: in schematischer Seitenansicht eine dritte Ausführungsform.
- Fig. 4: in ähnlicher Darstellung wie Fig. 1 eine Ausführungsform der zweiten Lösung gemäß der Erfindung;
- Fig. 5: ein Detail der in Fig. 1 dargestellten Vorrichtung im Vertikalschnitt;
- Fig. 6: in schematischer Seitenansicht eine andere Ausführungsform der zweiten Lösung gemäß der Erfindung;
- Fig. 7: in schematischer Seitenansicht ein Detail der Vorrichtung gemäß Fig. 6.

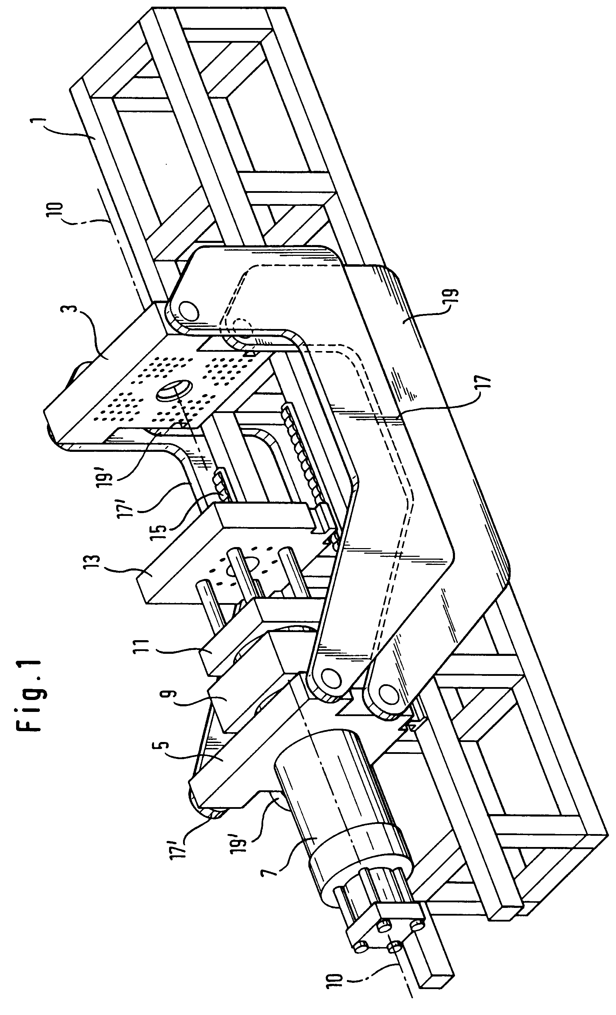

Die Vorrichtung gemäß Fig. 1 hat einen Maschinenrahmen 1. Dieser trägt zwei Festplatten 3,5, die sich mit Abstand parallel gegenüberstehen. Die eine Festplatte 3 ist als feststehende Formaufspannplatte ausgebildet und am Maschinenrahmen 1 unverschiebbar befestigt. Die andere Festplatte 5 ist eine Abstützplatte, an der ein hydraulischer Schließ-zylinder 7 befestigt ist, der die Festplatte 5 durchsetzt und dessen Kolben über zwischengeschaltete Druckplatten 9,11 eine entlang einer Schließkraftachse 10 wirkende Schließkraft auf eine bewegliche Formaufspannplatte 13 ausüben kann, die am Maschinenrahmen 1 z.B. auf Rollenbahnen 15 längsverschieblich geführt ist. Durch Beaufschlagung des Schließzylinders 7 mit Druckmittel kann die bewegliche Formaufspannplatte 13 gegen die feste Formaufspannplatte 3 bewegt werden, so daß von den Platten 3,13 getragene Formwerkzeuge (nicht dargestellt) geschlossen und mit einer Zuhaltekraft beaufschlagt werden. Die als Abstützplatte ausgebildete Festplatte 5 ist am Maschinenrahmen 1 vorzugsweise mittels eines Gleitlagers (nicht dargestellt) abgestützt, so daß sie kleine Verschiebebewegungen in dessen Längsrichtung ausführen kann.

Um die Festplatten 3,5 gegen die sie auseinandertreibenden Reaktionskräfte gegenseitig abzustützen, sind die Festplatten 3,5 durch vier Zugglieder 17, 19, 17', 19' miteinander verbunden, die paarweise auf beiden Seiten der Vorrichtung angeordnet sind. Die Zugglieder 17, 17', 19. 19' sind mit den beiden Festplatten 3,5 jeweils in deren Eckbereichen gelenkig verbunden, wobei die Zugglieder 17 an den rahmenferneren Ecken der Festplatten 3,5 und die Zugglieder 19, 19' an den dem Rahmen zugewandten Enden angreifen.

Jedes Zugglied 17, 17', 19, 19' ist allgemein C-förmig ausgebildet. Durch die C-förmige Ausbildung der rahmenferneren Zugglieder 17, 17' liegt deren Oberkante in ihrem mittleren Abschnitt tiefer als die Schließkraftachse 1 und vorzugsweise tiefer als die Unterkante der von den Formaufspannplatten 3, 13 getragenen Formwerkzeuge (nicht dargestellt). Dadurch ist ein unbehinderter Zugang zu dem Raum zwischen der festen Formaufspannplatte 3 und der beweglichen Formaufspannplatte 13 gewährleistet. Auch die dem Rahmen näherliegenden unteren Zugglieder 19, 19' sind obwohl dies für den freien Zugang zu dem Raum zwischen den Platten 3,13 nicht nötig wäre, in genau der gleichen Weise C-förmig ausgebildet und auch ansonsten identisch dimensioniert wie die oberen Zugglieder 17,17'. Damit ist gewährleistet, daß bei Belastung der Zugglieder 17,17',19,19' durch die Reaktionskräfte der von der der Schließvorrichtung 7 ausgeübten Schließkraft sämtliche Zugglieder 17,17',19,19' sich um exakt den gleichen Betrag in Längsrichtung der Maschine verformen. Hierdurch wird unabhängig vom Betrag dieser Verformung immer eine exakte Parallelität der Festplatten 3,5 gewährleistet. In der Praxis sind die Zugglieder so dimensioniert, daß ihre Verformung in Längsrichtung der Maschine bei maximaler Schließkraft weniger als 0,1% beträgt, d.h. bei einer Länge der Zugglieder von ca. 2 Meter wird eine Verformung in Längsrichtung in der Größenordnung von z.B. 1 mm einkalkuliert.

Anstelle der in Fig. 1 dargestellten gelenkigen Verbindungen der Zugglieder 17,17',19,19' mit den Festplatten 3,5 können alle diese Verbindungen, oder einige davon, auch starr ausgebildet sein, da die Verformungen der C-förmigen Zugglieder nur zu äußerst geringen Verdrehungen der C-Schenkel gegenüber den parallel bleibenden Festplatten 3,5 führen.

Während bei der Ausführungsform nach Fig. 1 das identische Verformungsverhalten der Zugglieder durch identische Ausbildung der Zugglieder erreicht wird, ist es, wie erwähnt, auch möglich, bei unterschiedlicher Form der Zugglieder ein identisches Elongationsverhalten durch entsprechende Dimensionierung zu erzielen. Deshalb können die Zugglieder auch unterschiedlich ausgebildet sein.

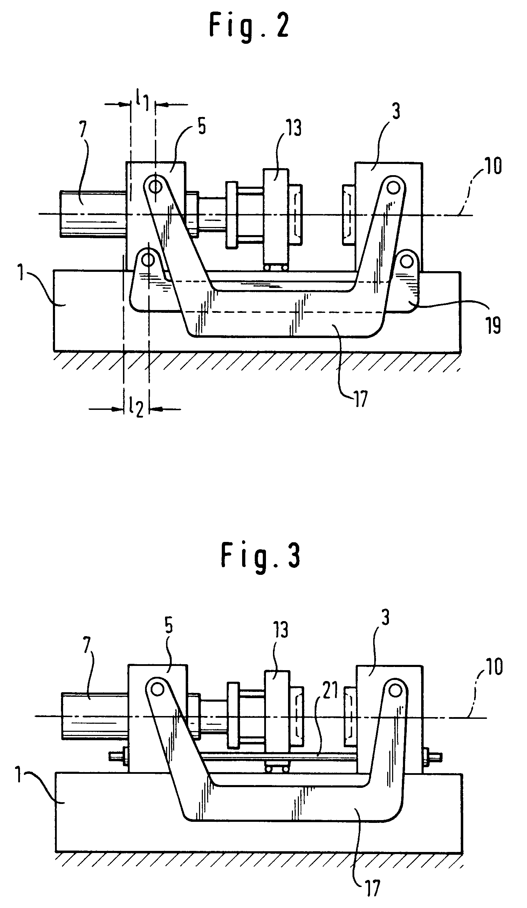

Bei der Ausführungsform nach Fig. 2 sind die an den rahmennäheren Ecken der Festplatten 5,3 angreifenden Zugglieder 19 wesentlich flacher C-förmig ausgebildet als die an den rahmenfernen Ecken angreifenden Zugglieder 17. Da letztere sich wegen der größeren Länge ihrer C-Schenkel stärker verformen können, müssen die rahmennäheren Zugglieder 19 durch Dimensionierung und Materialwahl, z.B. durch Verwendung dünnerer Bleche, so ausgebildet sein, daß sie trotz der kürzeren C-Schenkel das gleiche Elongationsverhalten aufweisen, so daß bei Anliegen der Schließkraft die Längenänderung l₁ der oberen Zugglieder 17 gleich der Längenänderung l₂ der unteren Zugglieder 19 ist.

Bei der Ausführungsform nach Fig. 3 sind nur die an den rahmenfernen Ecken angreifenden Zugglieder 17 C-förmig ausgebildet, während die dem Rahmen näherliegenden Ecken der Festplatten 3, 5 in konventioneller Weise durch geradlinige Holme 21 verbunden sind. Da diese sehr nahe am Maschinenrahmen 1 liegen, behindern sie den Zugang zu dem Raum zwischen der Festplatte 3 und der beweglichen Platte 13 nicht wesentlich. Auch hier muß durch eine entsprechend steife Konstruktion der C-förmigen Zugglieder 17 und entsprechend nachgiebige Ausbildung der Holme 21 dafür gesorgt werden, daß ihre Elongation unter einer gegebener Schließkraft exakt gleich ist, so daß die Parallelität der Festplatten 3,5 gewährleistet ist. Dies kann z.B. durch rohrförmige Ausbildung der geraden unteren Holme 21 und entsprechende Bemessung der Rohrwanddicke erreicht werden.

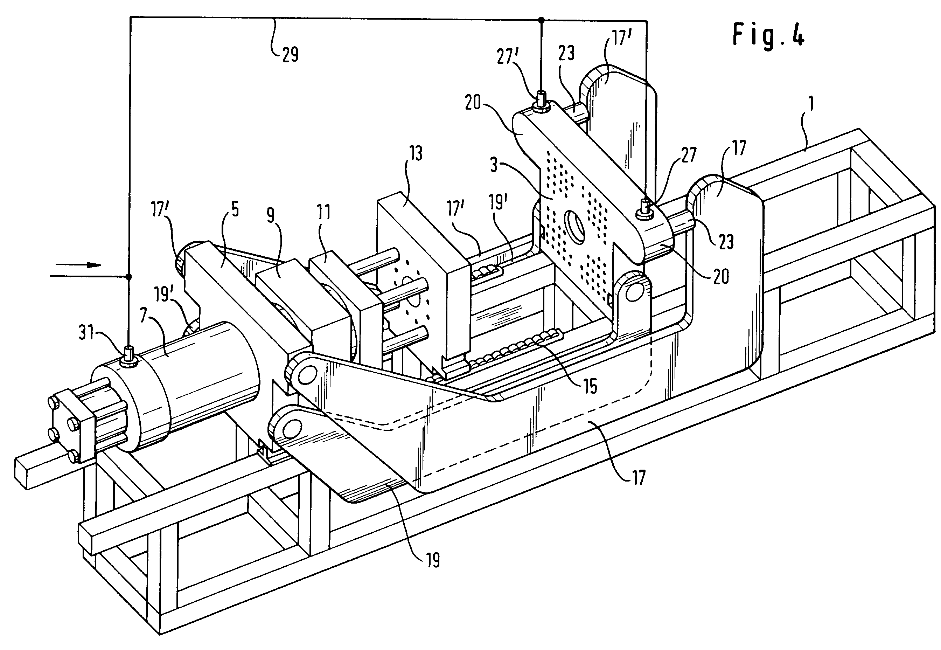

Die in Fig. 4 dargestellte Vorrichtung stimmt weitgehend mit der in Fig. 1 gezeigten Vorrichtung überein, und einander entsprechende Teile sind mit gleichen Bezugszeichen bezeichnet und werden hier nicht weiter erläutert.

Im Gegensatz zu der Vorrichtung nach Fig. 1 haben bei der Vorrichtung nach Fig. 4 die vier Zugglieder 17, 17', 19, 19' nicht die gleiche Verformungssteifigkeit. Die unteren Zugglieder 19, 19' haben eine von den oberen Zuggliedern 17, 17' abweichende Form, z.B. wie in Fig. 4 gezeigt eine "flachere" C-Form mit kürzeren C-Schenkeln.

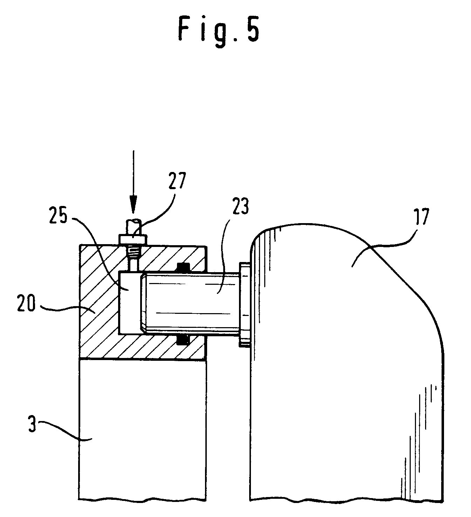

Da ihre Verformungssteifigkeit in Längsrichtung der Maschine unterschiedlich ist wurde die Schließkraft bzw. die Auftreibkraft in der Spritzgießform zu einer unterschiedlichen Elongation der Zugglieder 17,17' und 19,19' und zu einem Verlust der Parallelität der Festplatten 3,5 führen. Um dies zu vermeiden, sind die beiden oberen Zugglieder 17,17' mit der festen Formaufspannplatte 3 nicht starr bzw. in einem Gelenk verbunden. Vielmehr stützt sich die Platte 3 über ein hydraulisches Druckmittel gegen die Zugglieder 17,17' ab. Zu diesem Zweck hat die Platte 3 zwei seitliche Ansätze 20, die von den vertikalen Schenkeln der C-förmigen Zugglieder 17,17' hintergriffen werden. An jedem Zugglied 17,17' ist ein Kolben 23 befestigt, der in eine Zylinderbohrung eingreift, die in je einem Ansatz 20 der Platte 3 ausgebildet ist. Ein Detailschnitt durch diese Anordnung ist in Fig. 5 gezeigt. Der Kolben 23 taucht in die geschlossene Zylinderbohrung 25 ein, die in dem Ansatz 20 der Platte 3 ausgebildet ist. Diese Zylinderbohrung 25 hat einen Druckmittelanschluß 27, der, wie in Fig. 2 schematisch angedeutet, durch Druckmittelleitungen 29 mit dem Druckmittelversorgungsanschluß 31 des Schließzylinders 7 kommunizierend verbunden ist. Die Querschnittsfläche des Kolbens 23 ist so bemessen, daß sie 1/4 der wirksamen Querschnittsfläche des Kolbens im Schließzylinder 7 beträgt. Deshalb beträgt die über den Kolben 23 zwischen der Platte 3 und dem Zugglied 17 übertragene Kraft stets genau 1/4 der Schließkraft. Damit ist gewährleistet, daß unabhängig von den unterschiedlichen Längenänderungen der Zugglieder 17,19 bzw. 17',19', die durch die unterschiedliche Form und Bemessung dieser Zugglieder bedingt sein können, die Parallelität der Platten 3 und 5 immer exakt gewährleistet ist.

Die beschriebene Abstützung über einen Hydraulikzylinder kann anstatt bei den oberen Zuggliedern 17,17' auch bei den unteren Zuggliedern 19,19' oder auch bei allen vier Zuggliedern angewendet werden. Ebenso kann diese hydraulische Abstützung anstatt bei der festen Formaufspannplatte 3 bei der festen Zylinderplatte 5 angewendet werden.

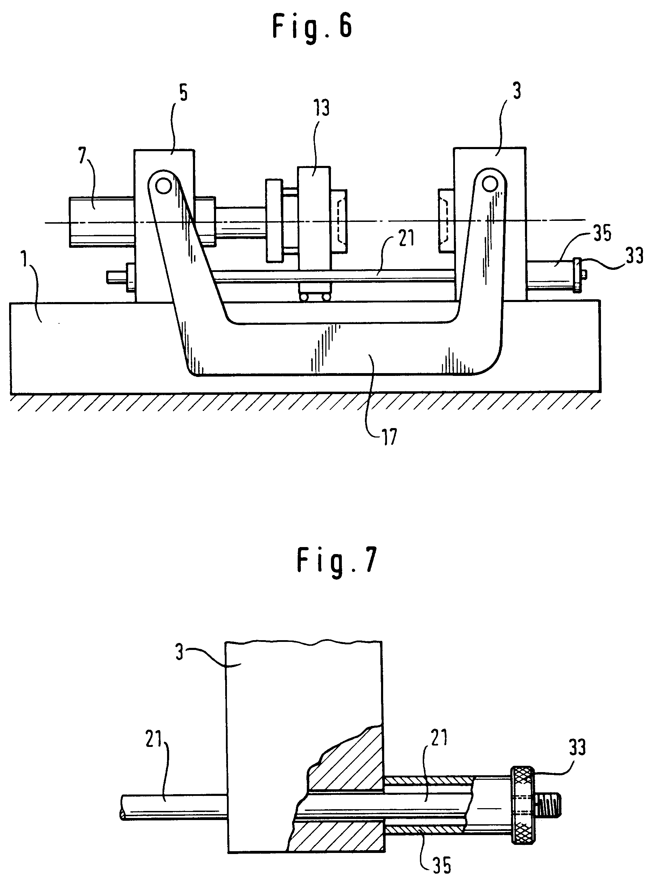

Bei der Ausführungsform gemäß Fig. 6 ist ähnlich wie in Fig. 2 jedes der rahmenferneren Zugglieder 17 allgemein C-förmig ausgebildet. Dadurch ist ein unbehinderter Zugang zu dem Raum zwischen der festen Formaufspannplatte 3 und der beweglichen Formaufspannplatte 13 gewährleistet. Die dem Rahmen näherliegenden unteren Zugglieder 21 sind in konventioneller Weise als geradlinige Stangen oder Holme ausgebildet. Da diese sehr nahe am Maschinenrahmen 1 liegen, behindern sie den Zugang zu dem Raum zwischen der Festplatte 3 und der beweglichen Platte 13 nicht.

Die C-förmigen Zugglieder 17 können sich in Längsrichtung der Maschine leichter verformen als die geradlinigen Zugholme 29. Ein Versuch, den C-förmigen Zuggliedern 17 eine so steife Konstruktion zu geben, daß sie die gleiche Elongation unter einer vorgegebenen Schließkraft aufweisen wie die geradlinigen Zugholme 21, würde zu einer sehr schweren und voluminösen Form der C-förmigen Zugglieder 17 führen.

Erfindungsgemäß wird deshalb der Weg beschritten, nicht die Dehnungssteifigkeit der C-förmigen Zugglieder 17 zu erhöhen, sondern die effektive Steifigkeit der geradlinigen Zugholme 21 zu verringern. Zu diesem Zweck ist, wie in Fig. 7 gezeigt, die Verbindung zwischen jedem Zugholm 21 und mindestens einer der Festplatten 3 oder 5 so gestaltet, daß sich der Zugholm 21 durch die Festplatte (hier die Formaufspannplatte 3) hindurch erstreckt und an seinem Ende eine Verbreiterung 33, z.B. eine aufgeschraubte Schraubenmutter trägt, und daß zwischen die Verbreiterung 33 und die Rückseite der Formaufspannplatte 3 eine Druckhülse 35 eingespannt ist. Wenn zwischen den Festplatten 3 und 5 die vom Schließzylinder 7 ausgeübte Schließkraft wirkt, welche die Zugglieder 17, 21 mit einer entsprechenden Zugkraft beaufschlagt, dann wirkt auf jede Druckhülse 35 eine entsprechende Druckkraft, so daß die Druckhülse 35 druckverformt wird. Jede Druckhülse 35 ist nun hinsichtlich Länge, Querschnitt und Werkstoff so dimensioniert, daß ihre Druckverformung gleich der Differenz zwischen den durch die Schließkraft verursachten Längsdehnungen der C-förmigen Zugglieder 17 und der geradlinigen Zugholme 21 ist. Mit anderen Worten, die durch die C-Form bedingte größere Elongation der Zugglieder 17 wird durch die elastische Druckverformung der Hülsen 35 ausgeglichen. Im Endeffekt bewirken die C-förmigen Zugglieder 17 und die geradlinigen Zugglieder 21 mit den Druckverformungshülsen 35 jeweils exakt gleiche Beträge der Auseinanderbewegung an den vier Ecken der Festplatten 3,5, so daß die Festplatten 3,5 trotz der unterschiedlichen Form und Dehnungssteifigkeit der Zugglieder 17, 21 immer ihre exakte Parallelität behalten.

Die Ausgestaltung der Druckhülsen derart, daß die den jeweils benötigten Betrag an Druckverformung liefern, ist in das Belieben des Fachmanns gestellt. Falls die C-förmigen Zugglieder 17 sehr schwach dimensioniert sind und somit eine sehr große Längsdehnung aufweisen, können die Druckhülsen 35 unter Umständen durch Federelemente nach Art von Tellerfedern oder dergleichen ersetzt oder ergänzt werden.

Die Erfindung ist nicht durch die Einzelheitn der beschriebenen Ausführungsformen beschränkt. Zahlreiche Änderungen und Ausgestaltungen der beschriebenen Ausführungsformen sind für den Fachmann im Rahmen der Erfindung möglich. So ist es beispielsweise bei der ersten erfindungsgemäßen Lösung, bei der die oberen und unteren Zugglieder gleiche Verformungssteifigkeit in Längsrichtung haben müssen, auch möglich, den unteren Zuggliedern 19 eine von den oberen Zuggliedern 17 abweichende C-Form mit kürzeren C-Schenkeln zu geben, ähnlich wie in Fig. 4 dargestellt, und durch schwächere Dimensionierung der unteren Zugglieder, durch Anbringung von Materialausschnitten oder durch andere Maßnahmen dafür zu sorgen, daß die Verformungssteifigkeit der unteren Zugglieder 19 herabgesetzt und die der oberen C-förmigen Zugglieder 17 angeglichen wird.

Vorzugsweise liegen bei allen Ausführungsformen die Angriffspunkte der oberen und unteren Zugglieder 17, 19 bzw. 21 in gleichen Abständen oberhalb bzw. unterhalb einer durch die Schließkraftachse 10 verlaufenden Horizontalebene. In diesem Fall verteilt sich die Schließkraft gleichmäßig auf die oberen und unteren Zugglieder, so daß diese, um gleiche Elongation unter der Wirkung der Schließkraft zu erzielen, gleiche Verformungssteifigkeit haben müssen. Es ist jedoch auch möglich, die Angriffspunkte der Zugglieder an den Festplatten in unterschiedlichen Abständen von der durch die Schließkraftachse 10 verlaufenden Horizontalebene anzuordnen. In diesem Fall entfällt auf diejenigen Zugglieder, deren Angriffspunkte an den Festplatten näher an der durch die Schließkraftachse 10 verlaufenden Horizontalebene liegen, ein größeren Anteil der Schließkraft. Eine derartige ungleichmäßige Verteilung der Schließkraft auf die Zugglieder muß dann bei der Bemessung der Verformungssteifigkeit der Zugglieder oder der die Zugglieder mit den Festplatten verbindenden Kraftübertragungselemente berücksichtigt werden.

Der Schließantrieb kann auch in anderer Weise als in Form eines Hydraulikzylinders ausgebildet sein, z.B. in bekannter Weise mit Kniehebelmechanik oder mit elektrisch angetriebener Schraubspindel.

## Patentansprüche

1. Formschließvorrichtung für eine Kunststofformmaschine, mit
einem Maschinenrahmen (1),
zwei Festplatten (3, 5), die auf dem Rahmen (1) abgestützt sind und sich mit Abstand parallel gegenüberstehen,
mindestens einer beweglichen Formaufspannplatte (13), die zwischen den Festplatten (3, 5) am Rahmen (1) verschiebbar geführt ist,
mindestens einem Schließantrieb (7), der an einer der Festplatten (5) gelagert ist und die bewegliche Formaufspannplatte (13) mit einer entlang einer Kraftachse wirkenden Schließkraft in Richtung auf die andere Festplatte (3) beaufschlagen kann,
und einer Anzahl Zugglieder (17, 17', 19, 19', 21), die die beiden Festplatten (3, 5) miteinander verbinden und die vom Schließantrieb (7) auf die beiden Festplatten (3, 5) ausgeübte Reaktionskraft als Zugkraft aufnehmen,
wobei die Zugglieder zwei obere Zugglieder, deren Angriffspunkte an den Festplatten (3, 5) oberhalb einer durch die Kraftachse verlaufenden Horizontalebene liegen, und zwei untere Zugglieder, der Angriffspunkte an den Festplatten (3, 5) unterhalb dieser Horizontalebene liegen, umfassen, dadurch **gekennzeichnet**, daß die oberen Zugglieder (17, 17') derart C-förmig ausgebildet sind, daß sie mindestens im Bereich zwischen der Formaufspannplatte (13) und der anderen Festplatte (3) mit ihrer Oberkante unterhalb einer durch die Schließkraftachse verlaufende Horizontalebene liegen und dadurch den Zugang zu dem Raum zwischen der Formaufspannplatte (13) und der Festplatte (5) im wesentlichen nicht behindern, und daß die unteren Zugglieder (19) so ausgestaltet und dimensioniert sind, daß ihre Verformungssteifigkeit in Richtung der Schließkraft an die der oberen Zugglieder (17, 17') angepaßt ist, so daß bei gegebener Schließkraft die Elongation der unteren Zugglieder (19, 19') gleich der Elongation der oberen Zugglieder (17, 17') ist.

2. Vorrichtung nach Anspruch 1, dadurch **gekennzeichnet**, daß die unteren Zugglieder (19, 19') die gleiche C-Form und gleiche Abmessungen wie die oberen Zugglieder (17, 17') aufweisen.

3. Vorrichtung nach Anspruch 1, dadurch **gekennzeichnet**, daß die unteren Zugglieder als gerade Zugholme ausgebildet sind.

4. Vorrichtung nach Anspruch 3, dadurch **gekennzeichnet**, daß die unteren Zugglieder rohrförmig ausgebildet sind.

5. Vorrichtung nach Anspruch 1, dadurch **gekennzeichnet**, daß die Angriffspunkte der oberen Zugglieder (17, 17') an den Festplatten (3, 5) einen kleineren Abstand von der durch die Kraftachse (10) verlaufenden Horizontalebene haben als die Angriffspunkte der unteren Zugglieder (19, 19') an den Festplatten (3, 5).

6. Vorrichtung nach Anspruch 1, dadurch **gekennzeichnet**, daß die mindestens die oberen Zugglieder mit mindestens einer der Festplatten (3, 5) gelenkig verbunden sind.

7. Formschließvorrichtung für eine Kunststofformmaschine, mit
einem Maschinenrahmen (1),
zwei Festplatten (3, 5), die auf dem Rahmen (1) abgestützt sind und sich mit Abstand parallel gegenüberstehen,
mindestens einer beweglichen Formaufspannplatte (13), die zwischen den Festplatten (3, 5) am Rahmen (1) verschiebbar geführt ist,
mindestens einem Schließantrieb (7), der an einer der Festplatten (5) gelagert ist und die bewegliche Formaufspannplatte (13) mit einer entlang einer Kraftachse wirkenden Schließkraft in Richtung auf die andere Festplatte (3) beaufschlagen kann,
und einer Anzahl Zugglieder (17, 17', 19, 19', 21), die die beiden Festplatten (3, 5) miteinander verbinden und die vom Schließantrieb (7) auf die beiden Festplatten (3, 5) ausgeübte Reaktionskraft als Zugkraft aufnehmen,
wobei die Zugglieder zwei obere Zugglieder, deren Angriffspunkte an den Festplatten (3, 5) oberhalb einer durch die Kraftachse verlaufenden Horizontalebene liegen, und zwei untere Zugglieder, der Angriffspunkte an den Festplatten (3, 5) unterhalb dieser Horizontalebene liegen, umfassen, dadurch **gekennzeichnet**, daß die oberen Zugglieder (17, 17') derart C-förmig ausgebildet sind, daß sie mindestens im Bereich zwischen der Formaufspannplatte (13) und der anderen Festplatte (3) mit ihrer Oberkante unterhalb einer durch die Schließkraftachse verlaufende Horizontalebene liegen und dadurch den Zugang zu dem Raum zwischen der Formaufspannplatte (13) und der Festplatte (5) im wesentlichen nicht behindern, und daß jedes obere Zugglied (17, 17') oder jedes untere Zugglied (19, 19', 21) mit mindestens einer der Festplatten (3, 5) über ein nachgiebiges Kraftübertragungselement (25, 35) verbunden ist, dessen Verformungssteifigkeit gegenüber der Schließkraft so bemessen ist, daß es den Unterschied der Verformungsteifigkeit der oberen Zugglieder (17, 17') und unteren Zugglieder (19, 19', 21) ausgleicht.

8. Vorrichtung nach Anspruch 7, dadurch **gekennzeichnet**, daß das Kraftübertragungselement als ein Druckmittelzylinder (25) mit Kolben (23) ausgebildet ist,
daß der Schließenantrieb (7) ein hydraulischer Schließenantrieb ist und der Druckmittelraum des Schließantriebs (7) mit dem Druckmittelzylinder (25) verbunden ist,
und daß die wirksame Kolbenfläche des Kolbens (23) in einem vorgegebenen Verhältnis zu der wirksamen Kolbenfläche des Schließantriebs (7) steht, so daß die von dem Druckmittelzylinder (25) zwischen dem Zugglied und der Festplatte (3) übertragene Kraft gleich einem vorgegebenen Bruchteil der Schließkraft ist.

9. Vorrichtung nach Anspruch 8, dadurch **gekennzeichnet**, daß doe Angriffspunkte der oberen Zugglieder (17, 17') und unteren Zugglieder (19, 19') an den Festplatten (3, 5) in gleichen Abständen oberhalb bzw. unterhalb der durch die Kraftachse verlaufenden Horizontalebene (10) liegen, und daß die wirksame Kolbenfläche jedes Druckmittelzylinders (25), der ein oberes oder unteres Zugglied mit einer der Festplatten verbindet, gleich einem Viertel der wirksamen Kolbenfläche des Schließantriebes (7) ist.

10. Vorrichtung nach Anspruch 7, dadurch **gekennzeichnet**, daß jedes untere Zugglied (29) an mindestens einer der beiden Festplatten (3, 5) über ein Druckverformungselement (35) verankert ist, dessen Drucksteifigkeit an die unterschiedliche Dehnungssteifigkeit der unteren und oberen Zugglieder angepaßt ist.

11. Vorrichtung nach Anspruch 10, dadurch **gekennzeichnet**, daß jedes untere Zugglied (29) sich durch mindestens eine der Festplatten (3, 5) hindurch erstreckt und an seinem Ende eine Verbreiterung (33) trägt, und daß das Druckverformungselement eine zwischen der Verbreiterung und der Rückseite der Festplatte eingespannte Hülse (35) ist.

12. Vorrichtung nach einem der Ansprüche 1 bis 11, dadurch **gekennzeichnet**, daß sie Bestandteil einer Spritzgießmaschine ist und daß die eine Festplatte (3) als feststehende Formaufspannplatte und die andere Festplatte (5) als begrenzt verschiebbar gelagerte Abstützplatte ausgebildet ist.

13. Vorrichtung nach einem der Ansprüche 1 bis 10, dadurch **gekennzeichnet**, daß sie Bestandteil einer Blasformmaschine ist und daß an den beiden Festplatten (3, 5) zwei Schließantriebe gelagert sind, die zwei verschiebbare Formaufspannplatten gegeneinander mit Schließkraft beaufschlagen.

## Claims

1. Mould-closing device for a synthetic material moulding machine, with a machine frame (1), two fixed plates (3, 5), which are supported on the frame (1) and are located opposite each other in parallel at a distance apart, at least one movable mould clamping plate (13), which is guided to slide between the fixed plates (3, 5) on the frame (1), at least one closing drive (7), which is mounted on one of the fixed plates (5) and can act upon the movable mould clamping plate (13) with a closing force acting along a force axis in the direction of the other fixed plate (3), and a number of tension members (17, 17', 19, 19', 21), which connect the two fixed plates (3, 5) to each other and receive the reaction force exerted by the closing drive (7) on the two fixed plates (3, 5) as a tensile force, the tension members comprising two upper tension members, whereof the points of application on the fixed plates (3, 5) lie above a horizontal plane extending through the force axis, and two lower tension members, whereof the points of application on the fixed plates (3, 5) lie below this horizontal plane, characterised in that the upper tension members (17, 17') are constructed to be C-shaped so that at least in the region between the mould clamping plate (13) and the other fixed plate (3), they are located with their upper edge below a horizontal plane extending through the closing force axis and consequently do not essentially impede access to the space between the mould clamping plate (13) and the fixed plate (5), and that the lower tension members (19) are designed and dimensioned so that their resistance to deformation in the direction of the closing force is adapted to that of the upper tension members (17, 17'), so that with a given closing force, the elongation of the lower tension members (19, 19') is equal to the elongation of the upper tension members (17, 17').

2. Device according to Claim 1, characterised in that the lower tension members (19, 19') have the same C-shape and same dimensions as the upper tension members (17, 17').

3. Device according to Claim 1, characterised in that the lower tension members are constructed as straight tension struts.

4. Device according to Claim 3, characterised in that the lower tension members have a tubular construction.

5. Device according to Claim 1, characterised in that the points of application of the upper tension members (17, 17') on the fixed plates (3, 5) are at a smaller distance from the horizontal plane extending through the force axis (10) and the points of application of the lower tension members (19, 19') on the fixed plates (3, 5).

6. Device according to Claim 1, characterised in that at least the upper tension members are pivotally connected to at least one of the fixed plates (3, 5).

7. Mould-closing device for a synthetic material moulding machine, with a machine frame (1), two fixed plates (3, 5), which are supported on the frame (1) and are located opposite each other in parallel at a distance apart, at least one movable mould clamping plate (13), which is displaceably guided between the fixed plates (3, 5) on the frame (1), at least one closing drive (7), which is mounted on one of the fixed plates (5) and can act upon the movable mould clamping plate (13) with a closing force acting along a force axis, in the direction of the other fixed plate (3), and a number of tension members (17, 17', 19, 19', 21), which connect the two fixed plates (3, 5) to each other and receive the reaction force exerted by the closing drive (7) on the two fixed plates (3, 5) as a tensile force, the tension members comprising two upper tension members, whereof the points of application on the fixed plates (3, 5) lie above a horizontal plane extending through the force axis and two lower tension members, whereof the points of application on the fixed plates (3, 5) lie below this horizontal plane, characterised in that the upper tension members (17, 17') are constructed to be C-shaped so that at least in the region between the mould clamping plate (13) and the other fixed plate (3) they lie with their upper edge below a horizontal plane extending through the closing force axis and consequently essentially do not impede access to the space between the mould clamping plate (13) and the fixed plate (5), and that each upper tension member (17, 17') or each lower tension member (19, 19', 21) is connected to at least one of the fixed plates (3, 5) by way of a resilient force-transmission member (25, 35), whereof the resistance to deformation with respect to the closing force is rated so that it equalizes the difference between the resistance to deformation of the upper tension members (17, 17') and lower tension members (19, 19', 21).

8. Device according to Claim 7, characterised in that the power transmission member is constructed as a pressure medium cylinder (25) with a piston (23), that the closing drive (7) is a hydraulic closing drive and the pressure medium chamber of the closing drive (7) is connected to the pressure medium cylinder (25), and that the effective piston surface of the piston (23) is in a predetermined ratio with respect to the effective piston surface of the closing drive (7), so that the force transmitted by the pressure medium cylinder (25) between the tension member and the fixed plate (3) is equal to a predetermined fraction of the closing force.

9. Device according to Claim 8, characterised in that the points of application of the upper tension members (17, 17') and lower tension members (19, 19') on the fixed plates (3, 5) lie at equal distances above or below the horizontal plane (10) extending through the force axis and that the effective piston surface of each pressure medium cylinder (25), which connects an upper or lower tension member to one of the fixed plates, is equal to a quarter of the effective piston surface of the closing drive (7).

10. Device according to Claim 7, characterised in that each lower tension member (29) is anchored on at least one of the two fixed plates (3, 5) by way of a pressure deformation member (35), whereof the resistance to pressure is adapted to the different resistance to elongation of the lower and upper tension members.

11. Device according to Claim 10, characterised in that each lower tension member (29) extends through at least one of the fixed plates (3, 5) and at its end supports an enlargement (33) and that the pressure deformation member is a sleeve (35) clamped between the enlargement and the rear side of the fixed plate.

12. Device according to one of Claims 1 to 11, characterised in that it is a component of an injection moulding machine and that the one fixed plate (3) is constructed as a stationary mould clamping plate and the other fixed plate (5) is constructed as a support plate mounted to slide in a restricted manner.

13. Device according to one of Claims 1 to 10, characterised in that it is a component of a blow-moulding machine and that mounted on the two fixed plates (3, 5) are two closing drives, which act on two displaceable mould clamping plates one against the other with a closing force.

## Revendications

1. Mécanisme de fermeture de moule pour une machine à mouler des matières plastiques, comportant
un cadre de machine (1),
deux plaques fixes (3, 5) qui s'appuient sur le cadre (1) et sont disposées parallèlement l'une à l'autre et à une certaine distance en face l'une de l'autre,
au moins une plaque (13) porte-outils de moulage, qui est guidée entre les plaques fixes (3, 5), avec liberté de coulissement sur le cadre (1),
au moins un appareil de fermeture (7) qui est porté sur l'une des plaques fixes (5) et petit contraindre la plaque porte-outils de moulage mobile (13) en direction de l'autre plaque fixe (3) par une force de fermeture agissant le long d'un axe de force,
et un certain nombre de tirants (17, 17', 19, 19', 21) qui relient l'une à l'autre les deux plaques fixes (3, 5) et reprennent, en tant que force de traction, la force de réaction exercée par l'appareil de fermeture (7) sur les deux plaques fixes (3, 5),
dans lequel les tirants comportent deux tirants supérieurs, dont les points d'application sur les plaques fixes (3, 5) se situent au-dessus d'un plan horizontal passant par l'axe de la force et deux tirants inférieurs dont les points d'application sur les plaques fixes (3, 5) se situent au-dessous de ce plan horizontal, caractérisé par le fait que les tirants supérieurs (17, 17') ont une forme en C de façon telle qu'au moins dans la zone située entre la plaque porte-outils de moulage (13) et l'autre plaque fixe (3), ils se situent, par leur bord supérieur, au-dessous d'un plan horizontal passant par l'axe de la force de fermeture et, de ce fait, n'empêchent pas sensiblement l'accès à l'espace situé entre la plaque porte-outils de moulage (13) et la plaque fixe (5), et que les tirants inférieurs (19) sont de structure et de dimension telles que leur rigidité à la déformation selon la direction de la force de fermeture est adaptée à celle des tirants supérieurs (17, 17') de façon que, pour une force de fermeture donnée, l'allongement du tirant inférieur (19, 19') soit égal à l'allongement des tirants supérieurs (17, 17').

2. Mécanisme selon la revendication 1, caractérisé par le fait que les tirants inférieurs (19, 19') présentent la même forme en C et les mêmes dimensions que les tirants supérieurs (17, 17').

3. Mécanisme selon la revendication 1, caractérisé par le fait que les tirants inférieurs ont la forme de longerons rectilignes travaillant à la traction.

4. Mécanisme selon la revendication 3, caractérisé par le fait que les tirants inférieurs ont une forme tubulaire.

5. Mécanisme selon la revendication 1, caractérisé par le fait que les points d'application des tirants supérieurs (17, 17') sur les plaques fixes (3, 5) sont à une plus petite distance du plan horizontal passant par l'axe de la force (10) que les points d'application des tirants inférieurs (19, 19') sur les plaques fixes (3, 5).

6. Mécanisme selon la revendication 1, caractérisé par le fait qu'au moins les tirants supérieurs sont reliés avec articulation avec au moins l'une des plaques fixes (3, 5).

7. Mécanisme de fermeture de moule pour une machine à mouler des matières plastiques, comportant
un cadre de machine (1),
deux plaques fixes (3, 5) qui s'appuient sur le cadre (1) et sont disposées parallèlement l'une à l'autre et à une certaine distance en face l'une de l'autre,
au moins une plaque (13) porte-outils de moulage, qui est guidée entre les plaques fixes (3, 5), avec liberté de coulissement sur le cadre (1),
au moins un appareil de fermeture (7) qui est porté sur l'une, des plaques fixes (5) et peut contraindre la plaque porte-outils de moulage mobile (13) en direction de l'autre plaque fixe (3) par une force de fermeture agissant le long d'un axe de force,
et un certain nombre de tirants (17, 17', 19, 19', 21) qui relient l'une à l'autre les deux plaques fixes (3, 5) et reprennent, en tant que force de traction, la force de réaction exercée par l'appareil de fermeture (7) sur les deux plaques fixes (3, 5),
dans lequel les tirants comportent deux tirants supérieurs, dont les points d'application sur les plaques fixes (3, 5) se situent au-dessus d'un plan horizontal passant par l'axe de la force et deux tirants inférieurs dont les points d'application sur les plaques fixes (3, 5) se situent au-dessous de ce plan horizontal, caractérisé par le fait que les tirants supérieurs (17, 17') ont une forme en C de façon telle qu'au moins dans la zone située entre la plaque porte-outils de moulage (13) et l'autre plaque fixe (3), ils se situent, par leur bord supérieur, au-dessous d'un plan horizontal passant par l'axe de la force de fermeture et, de ce fait, n'empêchent pas sensiblement l'accès à l'espace situé entre la plaque porte-outils de moulage (13) et la plaque fixe (5), et que chaque tirant supérieur (17, 17') ou chaque tirant inférieur (19, 19', 21) est relié à au moins l'une des plaques fixes (3, 5) par l'intermédiaire d'un élément de transmission de la force (25, 35), qui cède et dont la rigidité à la déformation en face de la force de fermeture est dimensionnée de façon à compenser la différence de la rigidité à la déformation du tirant supérieur (17, 17') et des tirants inférieurs (19, 19', 21).

8. Mécanisme selon la revendication 7, caractérisé par le fait que l'élément de transmission de la force est conçu sous forme d'un cylindre pour fluide sous pression (25) avec piston (23),
que l'appareil de fermeture (7) est un appareil de fermeture hydraulique et que l'espace de l'appareil de fermeture (7) pour le fluide sous pression est relié au cylindre pour fluide sous pression (25),
et que la surface active du piston (23) est, avec la surface active du piston de l'appareil de fermeture (7), dans un rapport prescrit, de sorte que la force transmise par le cylindre pour fluide sous pression (25) entre le tirant et la plaque fixe (3) est égale à une fraction prescrite de la force de fermeture.

9. Mécanisme selon la revendication 7, caractérisé par le fait que les points d'application des tirants supérieurs (17, 17') et des tirants inférieurs (19, 19') sur les plaques fixes (3, 5) se situent à égales distances au-dessus ou au-dessous du plan horizontal (10) passant par l'axe de la force et que la surface de piston active de chaque cylindre pour fluide sous pression (25) qui relie un tirant supérieur ou un tirant inférieur avec l'une des plaques fixes est égale au quart de la surface de piston active de l'appareil de fermeture (7).

10. Mécanisme selon la revendication 7, caractérisé par le fait que chaque tirant inférieur (29) est ancré dans au moins l'une des deux plaques fixes (3, 5) par l'intermédiaire d'un élément de déformation sou pression (35) dont la rigidité sous pression est adaptée à la différence de rigidité sous extension des tirants inférieurs et des tirants supérieurs.

11. Mécanisme selon la revendication 10, caractérisé par le fait que chaque tirant inférieur (29) s'étend à travers au moins l'une des plaques fixes (3, 5) et porte à son extrémité (33) un élargissement (33) et que l'élément de déformation sous pression est une douille (35) bridée entre l'élargissement et la face arrière de la plaque fixe.

12. Mécanisme selon l'une des revendications 1 à 11, caractérisé par le fait qu'il est une partie constitutive d'une machine de moulage par injection et que la première plaque fixe (3) est conçue sous forme de plaque porte-outils de moulage fixe et que l'autre plaque fixe (5) est conçue sous forme de plaque d'appui portée avec liberté de coulissement limitée.

13. Mécanisme selon l'une des revendications 1 à 10, caractérisé par le fait qu'elle est partie constitutive d'une machine à mouler par soufflage et que sur les deux plaques fixes (3, 5) sont portés deux appareils de fermeture (lui contraignent mutuellement avec une force de fermeture deux plaques porte-outils de moulage pouvant coulisser.
